Europäisches Patentamt

European Patent Office

Office européen des brevets

(19)

(11) Numéro de publication: **0 084 511**
**B1**

(12) **FASCICULE DE BREVET EUROPEEN**

(45) Date de publication du fascicule du brevet: **20.07.88**

(51) Int. Cl.⁴: **B 65 G 17/02, B 65 G 15/08**

(21) Numéro de dépôt: **83420006.5**

(22) Date de dépôt: **18.01.83**

(54) **Transporteur à bande.**

(30) Priorité: **19.01.82 FR 8200942**

(43) Date de publication de la demande:
**27.07.83 Bulletin 83/30**

(45) Mention de la délivrance du brevet:
**20.07.88 Bulletin 88/29**

(84) Etats contractants désignés:
**AT CH DE FR IT LI**

(56) Documents cités:
**DE-C- 933 920**
**FR-A-1 496 897**
**GB-A-1 351 132**
**US-A-2 019 700**

(73) Titulaire: **POWERPLEDGE Ltd.**
**44 Bedford Row**
**London WCIR 4 PR (GB)**

(72) Inventeur: **Mareau, Dominique**
**12, rue Doyen Gosse**
**F-38400 Saint Martin d'Heres (FR)**

(74) Mandataire: **Karmin, Roger et al**
**Cabinet MONNIER 150, cours Lafayette**
**F-69003 Lyon (FR)**

Courier Press, Leamington Spa, England.

EP 0 084 511 B1

**Description**

La présente invention concerne les tranporteurs à bande et permet de véhiculer de façon continue des produits divers, quels que soient la distance, le débit, le profil de l'installation, ainsi que la densité et la nature des matériaux.

Dans les systèmes connus de ce genre, les bandes transporteuses sont constituées par des tapis sans fin armés, de longueurs différentes et reposant sur des rouleaux transversaux. Ceux-ci sont répartis sur toute la longueur et suivant la charge, aussi bien dans la "zone de transport" que dans la partie retour de bande où leur espacement est différent. Leurs extrémités comportent généralement d'un côté un tambour "moteur" et de l'autre un tambour de renvoi, avec plusieurs dispositifs de tension possibles.

Les appareils ainsi conçus nécessitent des infrastructures importantes pour supporter les rouleaux ce qui conduit à un coût élevé des installations.

Par ailleurs, dans le cas de passage au droit de terrains très accidentés et pour des distances importantes, il est impératif d'adapter des supports au profil de ces terrains. Il en résulte une grande complexité d'implantation et de réalisation des éléments fixes.

Dans un autre mode de réalisation illustré dans le document DE-C-933 920 la bande transporteuse comporte des rebords associés chacun à un câble, lesdits rebords étant rapprochés afin que comme montré dans le document GB-A-1 351 132 cette bande forme une poche fermée. Les rebords ou talons de ladite bande coopèrent avec au moins une partie de la périphérie de leur câble respectif afin que d'éventuels mouvements de vrillage de celui-ci ne soient pas transmis à la bande.

Toutefois dans les transporteurs connus on n'a pas décrit la manière dont les talons restent assujettis aux câbles au droit des tambours extrêmes du transporteur. Il a seulement été indiqué, dans le document FR-A-1 496 897 qu'en position de chargement les rebords latéraux de la bande reposent chacun contre un galet après que les câbles aient quitté ces talons:

Les perfectionnements qui font l'objet de la présente invention visent à permettre de réaliser un passage très simple de la bande et des câbles sur deux tambours extrêmes dont l'un au moins est moteur et à assurer une solidarisation desdits rebords et câbles.

A pertir de l'état de la Technique reflété par le document DE-C-933 920, qui décrit un transporteur à bande dont les rebords sont constitués chacun par un talon pourvu d'une perforation circulaire coopérant élastiquement avec au moins une partie de la périphérie d'un câble pour éviter que le vrillage de celui-ci ne se transmette à la bande grâce à une fente ménagée dans chaque talon, des moyens étant prévus pour assurer l'aplatissement de la bande aux extrémités du transporteur, la présente invention est caractérisée en ce que dans ses tambours d'extrémités dont l'un est moteur sont ménagées des gorges trapézoïdales et en ce que les talons ou rebords de la bande présentent une forme trapézoïdale, la largeur desdites gorges des deux tambours étant telle qu'elle resserre les talons ou rebords afin qu'ils coopérent étroitement avec leur câble respectif.

L'ensemble ainsi constitué permet de véhiculer des matériaux de faible densité à une vitesse relativement lente sur une distance relativement réduite, comme on l'expliquera mieux plus loin.

Le dessin annexé, donné à titre d'exemple, permettra de mieux comprendre l'invention, les caractéristiques qu'elle présente et les avantages qu'elle est susceptible de procurer:

Fig. 1 est une vue schématique en pespective d'un transporteur à bande réalisé conformément à l'invention.

Fig. 2 à 4 en sont des coupes à plus grande échelle suivant II-II, III-III et IV-IV (fig. 1).

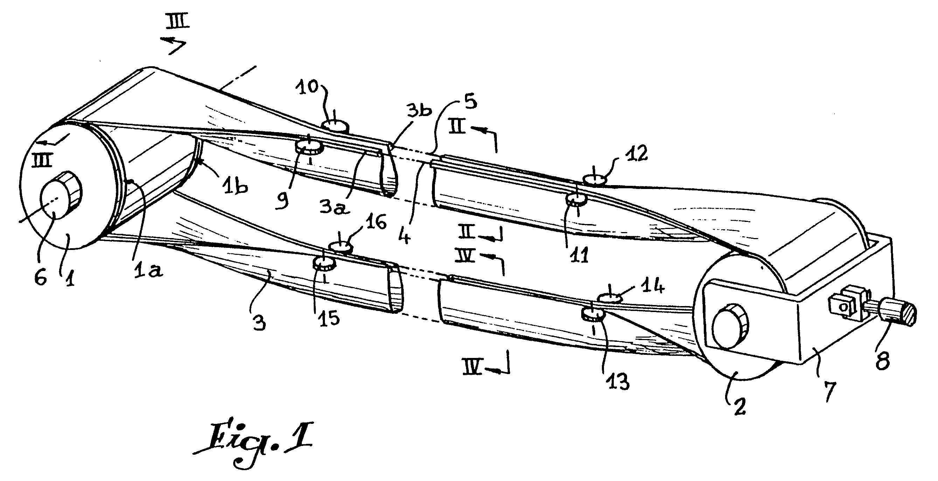

Le transporteur à bandes illustré en fig. 1 comprend essentiellement deux tambours d'extrémités 1, 2 dont le premier est moteur et entre lesquels est enroulée une bande transporteuse 3. Celle-ci comporte des rebords creux 3a, 3b dans lesquels passe un câble 4, 5. On note que le tambour 1 est entraîné par un moteur 6 prévu électrique, hydraulique ou autre, tandis que le tambour 2 est associé à un étrier 7 soumis à l'action d'un organe 8 tel qu'un vérin hydraulique qui assure la tension des deux brins de la bande 3.

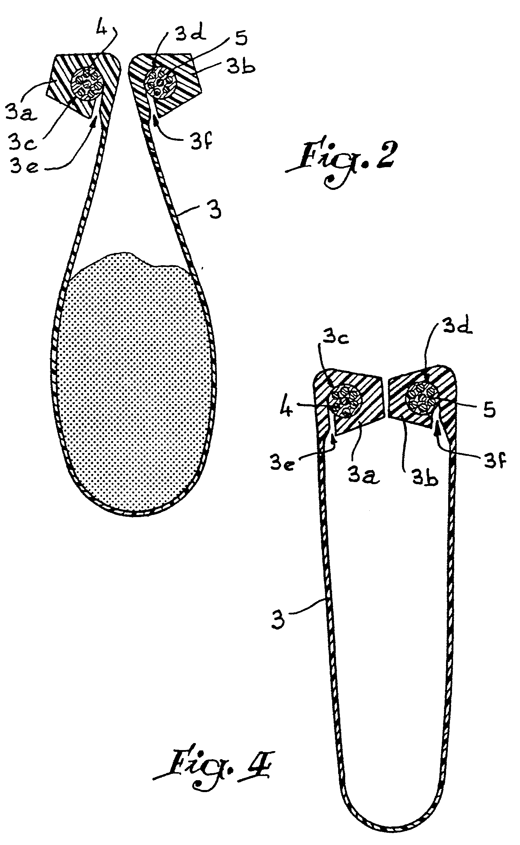

A la manière connue on charge la bande au niveau du tambour 1, puis celle-ci est partiellement refermée sur elle-même c'est-à-dire que ses rebords 3a, 3b sont rapprochés l'un de l'autre de manière à enserrer le produit transporté comme illustré en fig. 2. A cet effet des galets 9, 10 agissent sur les rebords respectifs 3a, 3b de la bande en vue de les rapprocher, tandis que d'autres galets 11, 12 tiennent la bande refermée jusqu'à ce qu'elle reprenne sa forme plate pour former le poste de déchargement au niveau du tambour 2.

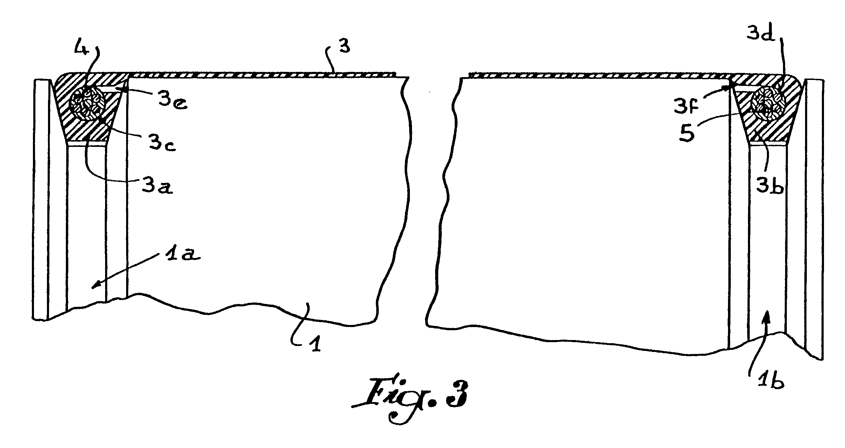

Une fois que la bande est passée sur ce dernier, des galets 13, 14 referment la bande et d'autres 15, 16 la maintiennent fermée jusqu'à une certaine distance du tambour 1 sur lequel elle vient reposer à plat comme illustré en fig. 3.

Sur cette figure on a représenté de manière précise la forme de la bande 3 dont chacun des rebords 3a, 3b est réalisé sous la forme d'un talon trapézoïdal comportant une perforation centrale circulaire 3c, 3d dans laquelle passe le câble respectif 4, 5. Une fente horizontale 3e, 3f part du haut de chaque perforation pour déboucher à la jonction de la bande transporteuse et de ses deux talons. Ainsi chaque talon affectet-il en gros la forme d'un crochet qui enserre le câble correspondant sans toutefois en être solidaire. Ainsi et comme on l'a expliqué plus haut, si le câble se vrille pour une raison ou pour une autre, ce vrillage ne communique pas au talon correspondant un effort de torsion.

La partie centrale de la bande 3 coopère avec la périphérie des deux tambours 1 et 2 tandis que

**0 084 511**

ses talons 3a, 3b pénètrent dans des gorges trapézoïdales ménagées dans lesdits tambours, seules les gorges 1a, 1b du tambour 1 ayant été représentées sur le dessin.

On s'arrange pour que la largeur des gorges des deux tambours resserre les talons de manière qu'ils coopèrent étroitement avec les câbles à la périphérie des deux tambours de telle sorte que l'entraînement soit bien assuré.

Du fait de la non adhérence des talons par rapport aux deux câbles de suspension 4 et 5, la charge déposée sur la bande et l'action des galets 9, 10 provoquent le pivotement desdits talons par rapport aux câbles de maniére que la bande forme dans sa partie éloignée des tambours une poche allongée illustrée en fig. 3.

On comprend aisément que le brin retour de la courroie est retourné dans le sens contraire du brin aller de telle sorte que la face supportant des matériaux à transporter se trouve à l'extérieur de la poche formée sur le brin retour et qu'on a illustré en fig. 4. Là encore du fait que chaque talon n'est pas angulairement fixe par rapport au câble correspondant, il peut tourner par rapport à celui-ci pour occuper la position illustrée en fig. 4, dans laquelle les talons sont disposés à l'inverse de la position qu'ils occupent en fig. 2.

### Revendication

Transporteur à bande (3) dont les rebords (3a, 3b) sont constitués chacun par un talon pourvu d'une perforation circulaire (3c, 3d) coopérant élastiquement avec au moins une partie de la périphérie d'un câble (4, 5) pour éviter que le vrillage de celui-ci ne se transmette à la bande grâce à une fente ménagée dans chaque talon, des moyens étant prévus pour assurer l'aplatissement de la bande aux extrémités du transporteur, caractérisé en ce que dans ses tambours d'extrémités (1, 2) dont l'un est moteur sont ménagées des gorges trapézoïdales (1a, 1b) et en ce que les talons ou rebords (3a, 3b) de la bande (3) présentent une forme trapézoïdale, la largeur desdites gorges des deux tambours étant telle qu'elle resserre les talons ou rebords (3a, 3b) afin qu'ils coopérent étroitement avec leur câble respectif (4, 5).

### Patentanspruch

Bandförderer (3), deren Ränder (3a, 3b) jeweils von, einer Wulst mit kreisförmmiger Öffnung (3c, 3d) gebildet sind, die zumindest mit einem Teil des Umfangs eines Seils (4, 5) elastisch zusammenwirkt und mittels eines Schlitzes in jeder Wulst verhindert, dass sich das Verwinden desselben auf das Band überträgt, wobei Mittel vorgesehen, sind, welche das Abflachen des Bandes an den Enden des Förderers sicherstellen, dadurch gekennzeichnet, dass in dem Umlenktrommeln (1, 2), von denen eine antreibend ist, trapezförmige Nuten (1a, lb) vorgesehen sind und die Wülste oder Ränder (3a, 3b) des Bandes (3) trapezförmig ausgebildet sind, wobei die Breite der Nuten der beiden Trommeln so bemessen ist, dass die Wülste oder Ränder (3a, 3b) zusammenepresst werden und dadurch mit ihrem jeweiligen Seil (4, 5) eng zusammenwirken.

### Claim

Belt conveyor (3) of which the edges (3a, 3b) each consist of a bead provided with a circular bore (3c, 3d) elastically cooperating with at least a part of the periphery of a cable (4, 5) so as to avoid twisting of the latter transmitting to the belt because of a slot provided in each bead, means being provided to ensure the flattening of the belt at the extremities of the conveyor, characterised in that the drums at the extremities (1, 2), of which one is driven, are provided with trapezoidal grooves (1a, lb) and in that the beads or edges (3a, 3b) of the belt have a trapezoidal shape, the width of the channels of the two drums being arranged to grip the beads or edges (3a, 3b) such that they cooperate closely with their respective cable.

Fig. 1

0 084 511

0 084 511

Fig. 2

Fig. 4

2

Fig. 3